# EUROPEAN PATENT SPECIFICATION

(11) **EP 3 214 112 B1**
(45) Date of publication and mention of the grant of the patent: **14.04.2021**
(21) Application number: 15864708.1
(22) Date of filing: 23.10.2015
(51) Int. Cl.: C08J 5/04, B64C 1/00, B64C 1/40, F28F 13/00, C09K 5/14

(54) **HEAT PASSAGE MEMBER**
WÄRMEDURCHGANGSTEIL
MEMBRE DE PASSAGE DE LA CHALEUR

(30) Priority: 03.12.2014 JP 2014245346
(43) Date of publication of application: 06.09.2017
(73) Proprietor: Mitsubishi Heavy Industries, Ltd., Tokyo 108-8215 (JP)
(72) Inventor: KAMIHARA, Nobuyuki, Tokyo 108-8215 (JP); ABE, Toshio, Tokyo 108-8215 (JP)
(74) Representative: Henkel & Partner mbB
(86) International application number: PCT/JP2015/080002
(87) International publication number: WO 2016/088470

(56) References cited:
- EP-A1- 1 873 283
- WO-A1-02/092897
- JP-A- 2001 073 255
- JP-A- 2004 528 717
- JP-A- 2005 213 459
- JP-A- 2008 138 968
- JP-A- 2010 229 238
- JP-A- 2011 046 967
- JP-A- 2011 100 959
- US-A1- 2003 116 678
- US-A1- 2004 118 579

## Description

### Field

The present invention relates to a heat passage member used for an aircraft, a satellite, or the like.

### Background

An aircraft includes a heat-generating section such as an electronic device, a battery, or an engine. Heat generated in the heat-generating section is released (exhausted) through a member called a heat passage member. Conventionally, as the heat passage member for an aircraft, a metal sheet or a jumper wire is used. JP 05-086799 U discloses an example of a heat flow control body having a paper honeycomb core used in a satellite.

WO 02/092897 A1 discloses a heat passage member (thermal management material) which includes an element in which thermally anisotropic material including longitudinally thermally conductive fibers such as carbon fibers derived from precursors such as petroleum or coal pitch are embedded in a support matrix of various materials.

US 2003/0116678 A1 discloses a composite laminate panel for use as an aircraft structural element, wherein the panel is constructed with layers of fabric being stacked to form the thickness of the panel. The fabric may be unidirectional tape, braided preforms or woven fabrics woven from carbon fibers which are preferably PAN-based fibers being encased in a thermoplastic or semi-cured resin matrix. Z-pins are driven into the panel so as to extend between an outer surface and an inner surface perpendicular to the carbon fibers in the plate-like element, which Z-pins are formed from pitch-based carbon fibers to provide for higher thermal conductivity than the PAN-based fibers of the panel.

EP 1873283 A1 discloses a carbon fiber reinforced resin molded product comprising a pitch-based carbon fibers mixture of pitch-based carbon short fibers with different diameter and length in a particular ratio randomly arranged and embedded in a matrix resin to improve the thermal conductivity within the matrix.

US 2004/0188579 A1 discloses a flexible heat sink comprising a base with a polymer and a plurality of polymeric protrusions extending away from the base. The base comprises thermally conductive particles and the protrusions comprise non-spherical thermally conductive particles. The size of the particles is selected to provide thermal conductivity and adequate distribution within the polymer and the conductive particles are mentioned to include a number of possible materials including carbon fibers coated with a metal or another conductive material.

### Summary

### Technical Problem

In recent years, a material of a member for an aircraft has been changed from metal to a composite material. In addition, use of an electronic device has been increased along with advancement of an aircraft. That is, in recent years, the amount of heat generated in a heat-generating section has been increased while thermal conductivity of a member for an aircraft has been decreased. Therefore, development of a technique capable of releasing heat generated in a heat-generating section efficiently has been desired.

An object of an aspect of the present invention is to provide a heat passage member capable of releasing heat generated in a heat-generating section of an aircraft, a satellite, or the like efficiently.

### Solution to Problem

According to a first aspect of the present invention, there is provided a heat passage member with the features of claim 1.

According to a first aspect of the present invention, a first composite member contains a carbon fiber reinforced plastic reinforced with a thermally conductive carbon fiber containing a metal-coated carbon fiber and/or a pitch-based carbon fiber. One end of the thermally conductive carbon fiber is, in use in a system of the invention, disposed in a heat-generating section, and the other end thereof is disposed in a heat-radiating section. Therefore, heat generated in the heat-generating section is transferred through the thermally conductive carbon fiber, and is released efficiently to the heat-radiating section.

In addition, the first composite member can be used as a strength member for an aircraft, a satellite, or the like. Therefore, heat generated in the heat-generating section can be released to the heat-radiating section without separately disposing a dedicated heat passage member such as a metal sheet or a jumper wire. Therefore, heat generated in the heat-generating section is released efficiently to the heat-radiating section while suppressing an increase in a weight. In addition, the thermally conductive carbon fibers and a plastic are molded together, and therefore robustness is improved.

According to another aspect of the present invention, there is provided a system in which a central portion of the thermally conductive carbon fiber of the heat passage member is disposed in a heat-generating section, and each of one end and the other end of the thermally conductive carbon fiber is disposed in a heat-radiating section in a fiber direction.

Therefore, heat generated in the heat-generating section is transferred through the thermally conductive carbon fiber, and is released efficiently to the heat-radiating section. Therefore, heat generated in the heat-generating section is released efficiently to the heat-radiating section while suppressing an increase in a weight. In addition, the thermally conductive carbon fibers and a plastic are molded together, and therefore robustness is improved.

In the heat passage member of the present invention, the first composite member may contain a stacked body obtained by stacking a plurality of prepreg sheets, each of which contains a plurality of the thermally conductive carbon fibers disposed in a parallel direction crossing the fiber direction, in a stacking direction crossing the fiber direction and the parallel direction, and a thermal conductivity in the fiber direction is larger than a thermal conductivity in each of the parallel direction and the stacking direction.

This imparts anisotropy to the thermal conductivity. Therefore, transfer of heat generated in the heat-generating section in a parallel direction and a stacking direction is suppressed, and heat is released efficiently to the heat-radiating section.

In the present invention, the first composite member is a plate-like member, the member includes a second composite member containing a plastic reinforced with a carbon fiber, disposed on one or both of front and back surfaces of the first composite member, and each of the one end and the other end of the thermally conductive carbon fiber is exposed.

The first composite member is thereby supported by a second composite member, and the strength is maintained. Each of the one end and the other end of the thermally conductive carbon fiber is not covered with the second composite member but is exposed. Therefore, heat generated in the heat-generating section is released efficiently from the heat-radiating section.

In the system of the present invention, the heat-generating section may include an electronic device of an aircraft, and the heat-radiating section includes a fuel tank of the aircraft.

Heat generated in an electronic device is thereby efficiently released to a fuel tank even when an amount of heat generated in the electronic device is increased.

### Advantageous Effects of Invention

An aspect of the present invention provides a member capable of releasing heat generated in a heat-generating section efficiently.

### Brief Description of Drawings

FIG. 1 is a diagram illustrating an example of an aircraft according to a first embodiment.
FIG. 2 is a perspective view schematically illustrating an example of a composite member according to the first embodiment.
FIG. 3 is a diagram schematically illustrating an example of a method for manufacturing the composite member according to the first embodiment.
FIG. 4 is a cross-sectional view illustrating an example of a member according to the first embodiment.
FIG. 5 is a cross-sectional view illustrating an example of a member according to a second embodiment.
FIG. 6 is a plan view illustrating an example of a main wing of an aircraft according to a third embodiment.
FIG. 7 is a diagram schematically illustrating an example of a shear tie according to the third embodiment.
FIG. 8 is a cross-sectional view illustrating an example of the shear tie according to the third embodiment.

### Description of Embodiments

Hereinafter, embodiments of the present invention will be described with reference to the drawings, but the present invention is not limited thereto. Components of the embodiments described below can be combined with one another appropriately. Some components are not used in some cases.

### <First Embodiment>

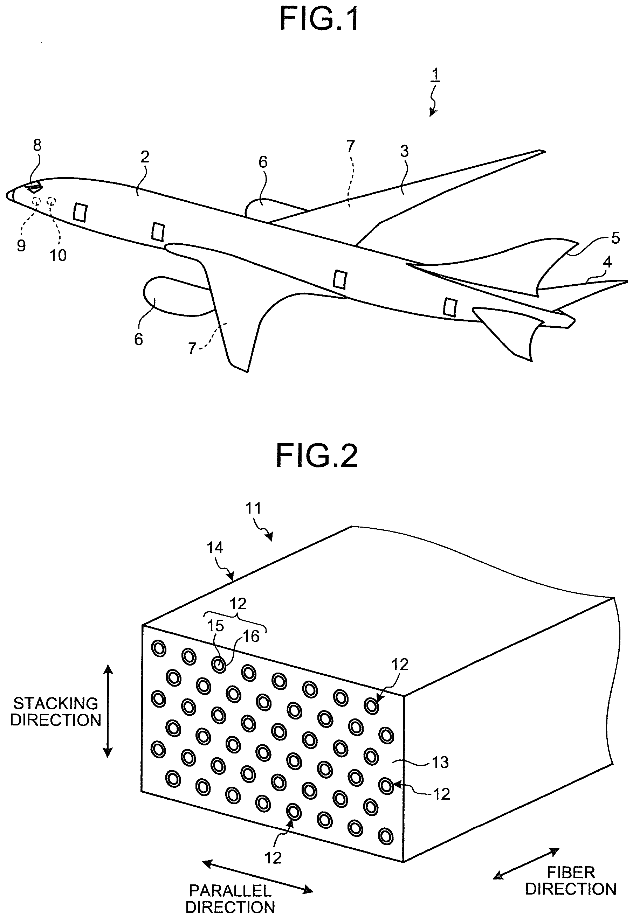

A first embodiment will be described. FIG. 1 is a diagram illustrating an example of an aircraft 1 according to the present embodiment. As illustrated in FIG. 1, the aircraft 1 includes a fuselage 2, a main wing 3, horizontal stabilizer 4, a vertical stabilizer 5, an engine 6, a fuel tank 7, a cockpit 8, an electronic device 9, and a battery 10.

At least a part of the fuselage 2, the main wing 3, the horizontal stabilizer 4, and the vertical stabilizer 5 is formed of a composite material. The composite material contains a carbon fiber reinforced plastic (CFRP) which is a plastic reinforced with a carbon fiber. Note that the composite material may contain a glass fiber reinforced plastic (GFRP) which is a plastic reinforced with a glass fiber.

Note that at least a part of the fuselage 2, the main wing 3, the horizontal stabilizer 4, and the vertical stabilizer 5 may be formed of a metal such as an aluminum alloy (duralumin).

In the present embodiment, at least a part of a member of the aircraft 1 contains a metal-coated carbon fiber reinforced plastic which is a plastic reinforced with a metal-coated carbon fiber (MC). The plastic reinforced with a metal-coated carbon fiber is also referred to as MC-CFRP. The metal-coated carbon fiber is a thermally conductive carbon fiber having thermal conductivity.

FIG. 2 is a perspective view schematically illustrating an example of a composite member 11 containing a metal-coated carbon fiber reinforced plastic according to the present embodiment. As illustrated in FIG. 2, the composite member 11 contains a metal-coated carbon fiber reinforced plastic 14 which is a plastic 13 reinforced with a metal-coated carbon fiber 12. The metal-coated carbon fiber 12 contains a carbon fiber 15 and a metal 16 with which the carbon fiber 15 is coated.

The composite member 11 contains a plurality of the metal-coated carbon fibers 12. Each of the metal-coated carbon fibers 12 is long in a first direction. The plurality of metal-coated carbon fibers 12 is arranged in parallel in a second direction perpendicular to the first direction. In addition, the plurality of metal-coated carbon fibers 12 is disposed in a third direction perpendicular to the first direction and the second direction.

In the following description, a longitudinal direction (first direction) of the metal-coated carbon fibers 12 is referred to as a fiber direction at need. In addition, in the following description, a direction (second direction) in which the plurality of metal-coated carbon fibers 12 is arranged in parallel is referred to as a parallel direction at need. In addition, in the following description, a direction (third direction) in which the plurality of metal-coated carbon fibers 12 is stacked is referred to as a stacked direction at need.

The plurality of metal-coated carbon fibers 12 is disposed at intervals in each of the parallel direction and the stacked direction. The plastic 13 is disposed among the plurality of metal-coated carbon fibers 12. In the present embodiment, the plastic 13 contains epoxy resin.

For example, the carbon fiber 15 of the metal-coated carbon fiber 12 has a diameter of 5 µm or more and 10 µm or less. A surface of the carbon fiber 15 is coated with the metal 16. The metal 16 has a higher thermal conductivity than the carbon fiber 15. The plastic 13 has a lower thermal conductivity than the metal 16 and the carbon fiber 15. That is, the plastic 13 has a lower thermal conductivity than the metal-coated carbon fiber 12.

In the present embodiment, the metal 16 is nickel. The metal-coated carbon fiber 12 is a nickel-coated carbon fiber. Note that the metal 16 may be at least one of gold, silver, and copper.

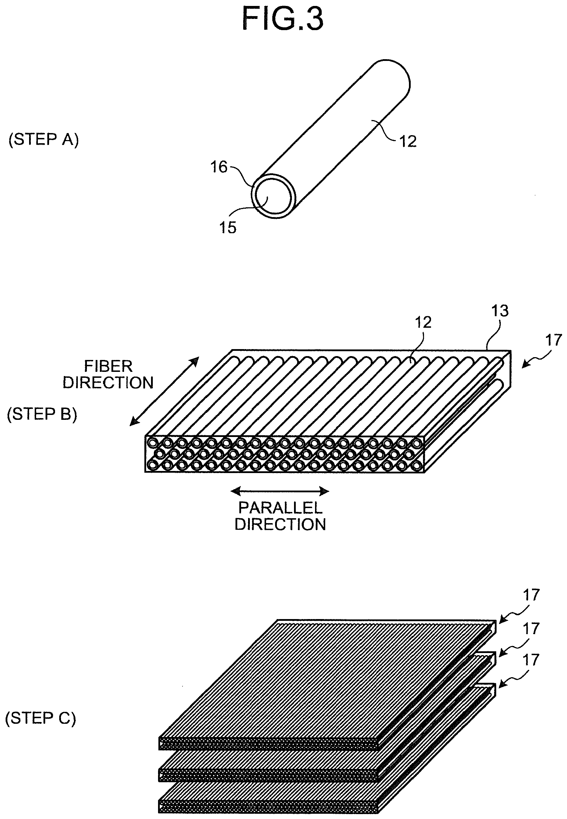

FIG. 3 is a diagram schematically illustrating an example of a method for manufacturing the composite member 11 according to the present embodiment. As illustrated in (step A) in FIG. 3, the metal-coated carbon fiber 12 is manufactured. The metal-coated carbon fiber 12 is manufactured by coating the carbon fiber 15 having a diameter of about 5 µm to 10 µm with the metal 16. In the present embodiment, the carbon fiber 15 is coated with nickel as the metal 16. Note that the carbon fiber 15 may be coated with at least one of gold, silver, and copper as the metal 16.

As illustrated in (step B) in FIG. 3, the plurality of metal-coated carbon fibers 12 is arranged in the parallel direction, and is hardened with the plastic 13 such as epoxy resin. The plurality of metal-coated carbon fibers 12 is hardened with the plastic 13 while being not twisted but arranged.

The parallel direction is a direction in which the plurality of metal-coated carbon fibers 12 disposed in the fiber direction is arranged. The fiber direction is perpendicular to the parallel direction.

A sheet-like member including the plastic 13 and the plurality of metal-coated carbon fibers 12 disposed in the parallel direction and hardened with the plastic 13 is referred to as a prepreg sheet 17.

As illustrated in (step C) in FIG. 3, a plurality of the prepreg sheets 17 manufactured is stacked in the stacking direction.

The stacking direction is a direction in which the plurality of prepreg sheets 17 is stacked. The stacking direction is perpendicular to the fiber direction and the parallel direction.

A stacked body of the prepreg sheets 17 is subjected to a heat treatment at a high temperature at a high pressure with a heating and pressing device called an autoclave. The composite member 11 of a stacked body in which the plurality of prepreg sheets 17 is stacked is thereby manufactured.

Note that in the present embodiment, all the metal-coated carbon fibers 12 in the plurality of prepreg sheets 17 are disposed in the same direction, that is, so-called one direction stacking is performed. So-called cross-ply stacking in which the metal-coated carbon fibers 12 in the first prepreg sheet 17 are disposed in the first direction and the metal-coated carbon fibers 12 in the second prepreg sheet 17 overlapping the first prepreg sheet 17 are disposed in the second direction crossing the first direction of the first prepreg sheet 17 may be performed.

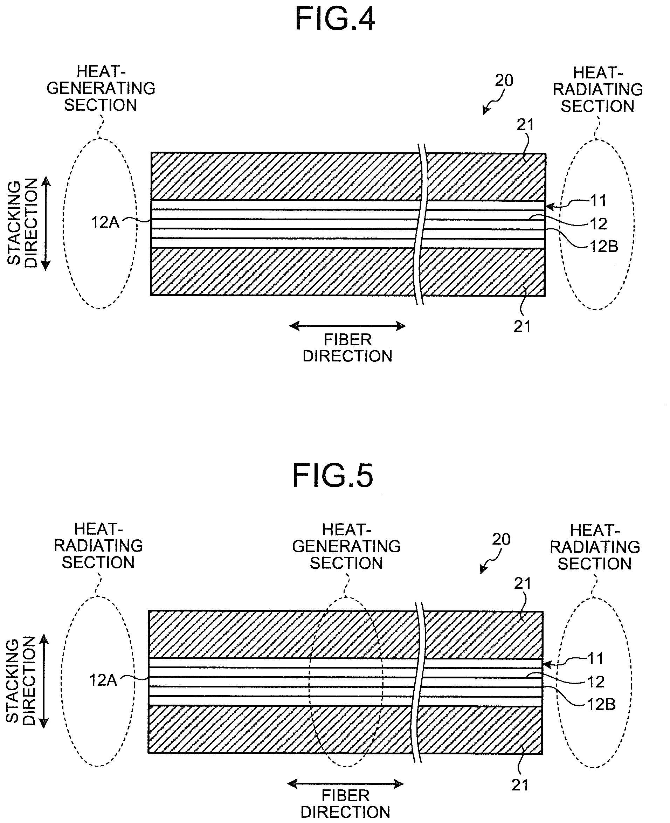

FIG. 4 is a cross-sectional view illustrating an example of a member (heat passage member) 20 for the aircraft 1 according to the present embodiment. In the present embodiment, the member 20 contains the composite member 11 and a composite member 21 connected to the composite member 11. The member 20 is used for at least a part of the fuselage 2, the main wing 3, the horizontal stabilizer 4, and the vertical stabilizer 5.

For example, the member 20 may be manufactured by stacking a prepreg sheet containing the metal-coated carbon fibers 12 and a prepreg sheet containing the carbon fibers not coated with metal, and subjecting the stacked body to a heat and pressure treatment with an autoclave.

As illustrated in FIG. 4, one end 12A of the metal-coated carbon fibers 12 is disposed in a heat-generating section of the aircraft 1 in the fiber direction. The other end 12B of the metal-coated carbon fibers 12 is disposed in a heat-radiating section of the aircraft 1 in the fiber direction.

For example, the heat-generating section of the aircraft 1 includes at least one of the electronic device 9, the battery 10, and the engine 6 of the aircraft 1. In addition, the heat-generating section includes a housing of the electronic device 9. For example, the heat-radiating section of the aircraft 1 includes the fuel tank 7 of the aircraft 1. Note that the heat-radiating section of the aircraft 1 may be an external space (space facing an outer surface of the fuselage 2) of the aircraft 1.

The composite member 11 is a plate-like member. In the example illustrated in FIG. 4, the composite member 21 is disposed in each of front and back surfaces of the composite member 11. The composite member 21 contains a carbon fiber reinforced plastic containing a plastic reinforced with a carbon fiber.

The carbon fiber of the carbon fiber reinforced plastic in the composite member 21 is not coated with metal. A thermal conductivity of the composite member 21 in the fiber direction is lower than a thermal conductivity of the composite member 11 in the fiber direction. A thermal conductivity of the composite member 21 in the parallel direction is lower than a thermal conductivity of the composite member 11 in the fiber direction. A thermal conductivity of the composite member 21 in the stacked direction is lower than a thermal conductivity of the composite member 11 in the fiber direction.

The thermal conductivity of the composite member 21 in the parallel direction may be equal to or lower than the thermal conductivity of the composite member 11 in the parallel direction. The thermal conductivity of the composite member 21 in the stacking direction may be equal to or lower than the thermal conductivity of the composite member 11 in the stacking direction.

The composite member 21 is not disposed in each of the one end 12A and the other end 12B of the metal-coated carbon fibers 12. Each of the one end 12A and the other end 12B of the metal-coated carbon fibers 12 is exposed. The one end 12A of the metal-coated carbon fibers 12 is in contact with the heat-generating section. The one end 12A of the metal-coated carbon fibers 12 may face the heat-generating section with a gap. The other end 12B of the metal-coated carbon fibers 12 is in contact with the heat-radiating section. The other end 12B of the metal-coated carbon fibers 12 may face the heat-radiating section with a gap.

It may be possible that the composite member 21 is disposed on the front surface of the composite member 11 and is not disposed on the back surface of the composite member 11. It may be possible that the composite member 21 is disposed on the back surface of the composite member 11 and is not disposed on the front surface of the composite member 11. It may be possible that the composite member 21 is not disposed on both of the front and back surfaces of the composite member 11.

The metal-coated carbon fibers 12 are disposed in the fiber direction of the member 20. The plastic 13 is disposed among the plurality of metal-coated carbon fibers 12 in each of the parallel direction and the stacking direction of the member 20. The thermal conductivity of the member 20 in the fiber direction is larger than the thermal conductivity of the member 20 in each of the parallel direction and the stacking direction.

Heat of the heat-generating section is absorbed by the metal-coated carbon fibers 12 through the one end 12A. The heat absorbed by the metal-coated carbon fibers 12 is transferred through the metal-coated carbon fibers 12, and is released (exhausted) from the other end 12B.

The thermal conductivity of the member 20 in each of the parallel direction and the stacking direction is smaller than the thermal conductivity of the member 20 in the fiber direction. Therefore, heat of the metal-coated carbon fibers 12 is exclusively moved in the fiber direction. Transfer of heat of the metal-coated carbon fibers 12 in the parallel direction and the stacking direction is suppressed.

In the present embodiment, the composite member 21 is disposed in each of the front and back surfaces of the composite member 11 in the stacking direction. The heat transfer coefficient of the composite member 21 in each of the fiber direction, the parallel direction, and the stacking direction is smaller than the heat transfer coefficient of the composite member 11 in the fiber direction. Therefore, release of heat of the metal-coated carbon fibers 12 from a surface of the composite member 21 is suppressed.

As described above, according to the present embodiment, the composite member 11 contains the metal-coated carbon fiber reinforced plastic 14 reinforced with the metal-coated carbon fibers 12, the one end 12A of the metal-coated carbon fibers 12 is disposed in the heat-generating section of the aircraft 1, and the other end 12B of the metal-coated carbon fibers 12 is disposed in the heat-radiating section of the aircraft 1. The metal 16 of the metal-coated carbon fibers 12 has a high thermal conductivity. Therefore, heat generated in the heat-generating section is transferred through the metal-coated carbon fibers 12, and is released efficiently to the heat-radiating section.

In addition, the composite member 11 can be used as a strength member for the aircraft 1. Therefore, heat generated in the heat-generating section can be released to the heat-radiating section without separately disposing a dedicated heat passage member such as a metal sheet or a jumper wire, disposed in prior art. Therefore, heat generated in the heat-generating section of the aircraft 1 is released efficiently to the heat-radiating section while suppressing an increase in the weight of the aircraft 1.

In the present embodiment, the composite member 11 contains a stacked body obtained by stacking the plurality of prepreg sheets 17, each of which contains the plurality of metal-coated carbon fibers 12 disposed in the parallel direction crossing the fiber direction, in the stacking direction crossing the fiber direction and the parallel direction. The thermal conductivity of the member 20 in the fiber direction is larger than the thermal conductivity of the member 20 in the parallel direction and the thermal conductivity of the member 20 in the stacking direction. This imparts anisotropy to the thermal conductivity, and transfer of heat generated in the heat-generating section in the parallel direction and the stacking direction is suppressed, and is released efficiently to the heat-radiating section. For example, when a member or a device which is undesirable for being heated is present in at least one of the parallel direction and the stacking direction of the member 20, the member 20 with anisotropy in the thermal conductivity suppresses transfer of heat to the member or the device.

In the present embodiment, the composite member 11 is a plate-like member, and the member 20 contains the composite member 21 containing a carbon fiber reinforced plastic, disposed on the front surface and/or the back surface of the composite member 11. The composite member 11 is thereby supported by the composite member 21, and the strength is maintained. In addition, the composite member 21 has a smaller thermal conductivity than the composite member 11 in the fiber direction. Therefore, when a member or a device which is undesirable for being heated is present in at least one of the parallel direction and the stacking direction of the member 20, the composite member 21 suppresses transfer of heat to the member or the device.

In addition, in the present embodiment, each of the one end 12A and the other end 12B of the metal-coated carbon fibers 12 is not coated with the composite member 21 or the like, but is exposed. Since the one end 12A is exposed, heat generated in the heat-generating section is absorbed efficiently by the metal 16 of the metal-coated carbon fibers 12 through the one end 12A. Since the other end 12B is exposed, heat generated in the heat-generating section and moving in the metal 16 of the metal-coated carbon fibers 12 is released efficiently by the heat-radiating section through the other end 12B. As described above, each of the one end 12A and the other end 12B of the metal-coated carbon fibers 12 is exposed in the present embodiment. Therefore, heat generated in the heat-generating section is released efficiently from the heat-radiating section.

In the present embodiment, the heat-generating section of the aircraft 1 includes the electronic device 9 of the aircraft 1. The heat-radiating section of the aircraft 1 includes the fuel tank 7 of the aircraft 1.
Heat generated in the electronic device 9 is thereby efficiently released to the fuel tank 7 even when use of the electronic device 9 is increased along with advancement of the aircraft 1 and heat generated in the electronic device 9 is increased.

### <Second Embodiment>

A second embodiment will be described. In the following description, the same reference signs are given to components which are the same as or equal to the components in the above embodiment, and description thereof is simplified or omitted.

FIG. 5 is a cross-sectional view illustrating an example of a method for using a member 20. As illustrated in FIG. 5, a heat-generating section of an aircraft 1 may be disposed in a central portion between one end 12A and the other end 12B in the member 20. That is, the central portion of the metal-coated carbon fibers 12 may be disposed in the heat-generating section, and each of the one end 12A and the other end 12B of the metal-coated carbon fibers 12 may be disposed in heat-radiating sections in the fiber direction. In the present embodiment, each of the one end 12A and the other end 12B is disposed in the heat-radiating sections of the aircraft 1. Heat generated in the heat-generating section is released from each of the one end 12A and the other end 12B. In addition, each of the one end 12A and the other end 12B of the metal-coated carbon fibers 12 is exposed, and heat generated in the heat-generating section is thereby released efficiently from the heat-radiating sections.

### <Third Embodiment>

A third embodiment will be described. In the following description, the same reference signs are given to components which are the same as or equal to the components in the above embodiments, and description thereof is simplified or omitted.

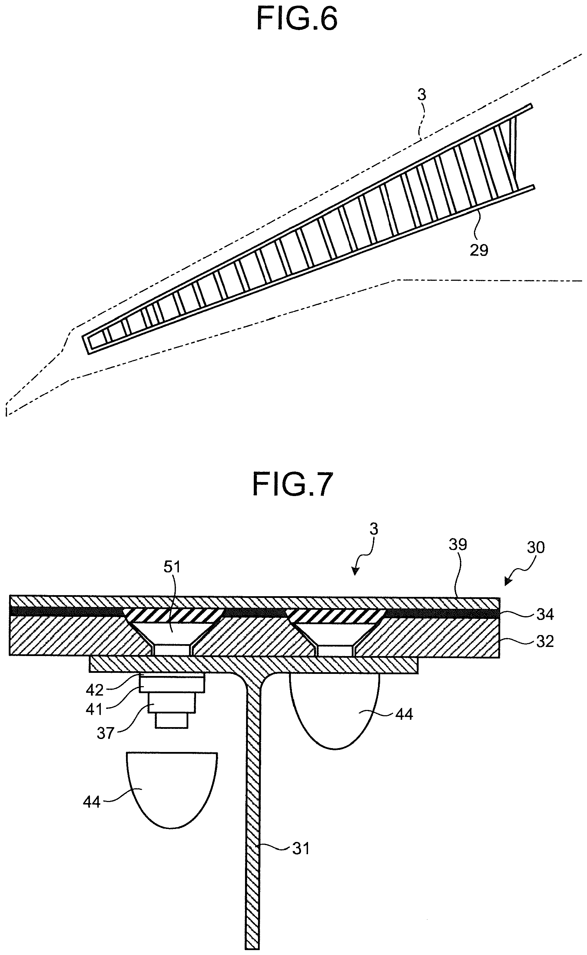

FIG. 6 illustrates a plan view of a main wing 3 of an aircraft 1. A shear tie (structural member) 31 described below is disposed in at least a part of rib lines 29.

FIG. 7 is a diagram schematically illustrating a positional relationship between an outer plate 30 and the shear tie 31. The shear tie 31 is a member for bonding a stringer, a rib, or the like to the outer plate 30. In the present embodiment, the shear tie 31 is formed of a composite member 21 containing a carbon fiber reinforced plastic and a composite member 11 containing a metal-coated carbon fiber reinforced plastic 14.

The outer plate 30 and the shear tie 31 are fixed with a fastener 51. The outer plate 30 and the shear tie 31 are fixed by connecting a collar (nut) 37 to an end of the fastener 51. A washer 41 and a spacer 42 are disposed between the collar 37 and the shear tie 31.

The collar 37, the washer 41, and the spacer 42 are covered with a cap 44. The cap 44 is disposed so as to be in close contact with the shear tie 31.

The outer plate 30 includes a carbon fiber reinforced plastic layer 32, a glass fiber reinforced plastic layer 34, and a copper paint layer 39.

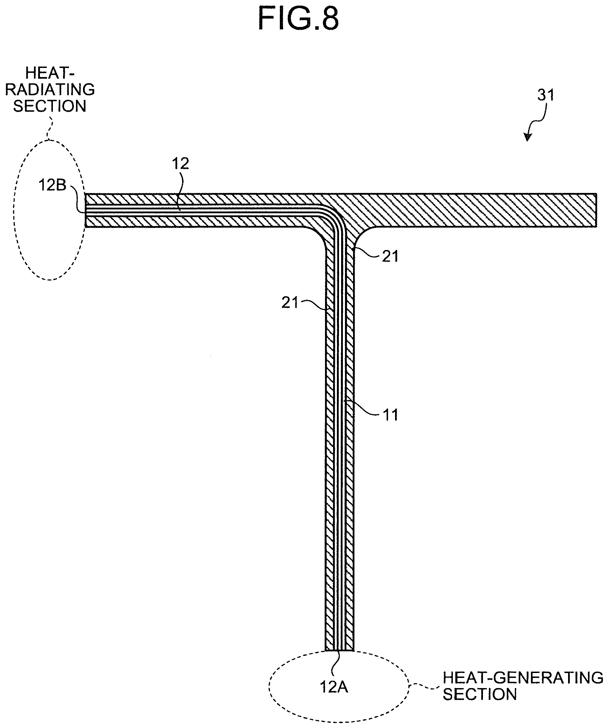

FIG. 8 is a cross-sectional view illustrating an example of the shear tie 31 according to the present embodiment. The shear tie 31 is formed of the composite member 21 containing a carbon fiber reinforced plastic and the composite member 11 containing the metal-coated carbon fiber reinforced plastic 14.

The composite member 11 is sandwiched by the composite member 21. The composite member 11 is disposed in a part of the shear tie 31. In FIG. 8, one end 12A of metal-coated carbon fibers 12 in the composite member 11 is disposed at a lower end of the shear tie 31. The other end 12B of the metal-coated carbon fibers 12 in the composite member 11 is disposed at an upper left end of the shear tie 31. In the example illustrated in FIG. 8, an upper right end of the shear tie 31 is formed of the composite member 21.

A heat-generating section of the aircraft 1 is disposed at the lower end of the shear tie 31. A heat-radiating section of the aircraft 1 is disposed at the upper left end of the shear tie 31.

The other end 12B of the metal-coated carbon fibers 12 in the composite member 11 and the heat-radiating section of the aircraft 1 may be disposed at the upper right end of the shear tie 31. The other end 12B of the metal-coated carbon fibers 12 in the composite member 11 and the heat-radiating section of the aircraft 1 may be disposed at each of the upper right end and the upper left end of the shear tie 31. The one end 12A of the metal-coated carbon fibers 12 in the composite member 11 and the heat-generating section of the aircraft 1 may be disposed at the upper right end and/or the upper left end of the shear tie 31. The other end 12B of the metal-coated carbon fibers 12 in the composite member 11 and the heat-radiating section of the aircraft 1 may be disposed at the lower end of the shear tie 31.

As described above, the composite member 11 and the composite member 21 may be bent, or may be processed into an arbitrary shape (three-dimensional shape).

In each of the above embodiments, a pitch-based carbon fiber may be disposed in place of the metal-coated carbon fibers 12, or together with the metal-coated carbon fibers 12. The pitch-based carbon fiber is a thermally conductive carbon fiber at least having a higher thermal conductivity than a PAN carbon fiber.

Each of the above embodiments has been described as the example in which the member 20 is used for a structural member of the aircraft 1. The member 20 may be used for a structural member of a satellite.

The fiber direction, the parallel direction, and the stacking direction are perpendicular to one another in each of the above embodiments. The fiber direction and the parallel direction may cross each other, for example, at an angle of 80 degrees or more and 100 degrees or less. The fiber direction and the stacking direction may cross each other, for example, at an angle of 80 degrees or more and 100 degrees or less. The parallel direction and the stacking direction may cross each other, for example, at an angle of 80 degrees or more and 100 degrees or less.

**Reference Signs List**
- 1: AIRCRAFT
- 2: FUSELAGE
- 3: MAIN WING
- 4: HORIZONTAL STABILIZER
- 5: VERTICAL STABILIZER
- 6: ENGINE
- 7: FUEL TANK
- 8: COCKPIT
- 9: ELECTRONIC DEVICE
- 10: BATTERY
- 11: COMPOSITE MEMBER
- 12: METAL-COATED CARBON FIBER
- 12A: ONE END
- 12B: THE OTHER END
- 13: PLASTIC
- 14: METAL-COATED CARBON FIBER REINFORCED PLASTIC
- 15: CARBON FIBER
- 16: METAL
- 17: PREPREG SHEET
- 20: MEMBER
- 21: COMPOSITE MEMBER
- 29: RIB LINE
- 30: OUTER PLATE

- 31: SHEAR TIE
- 32: CARBON FIBER REINFORCED PLASTIC LAYER
- 34: GLASS FIBER REINFORCED PLASTIC LAYER
- 37: COLLAR
- 39: COPPER PAINT LAYER
- 41: WASHER
- 42: SPACER
- 44: CAP
- 51: FASTENER

## Claims

1. A heat passage member (20) comprising
a first composite member (11) which is a plate-like member and contains a plastic reinforced with thermally conductive carbon fibers containing one or both of metal-coated carbon fibers (12) and pitch-based carbon fibers, wherein the thermally conductive carbon fibers extend in a fiber direction, are disposed in a parallel direction crossing the fiber direction, and in a stacking direction crossing the fiber direction and the parallel direction, and each of one end (12A) and the other end (12B) of the thermally conductive carbon fibers in the fiber direction is exposed; and
a second composite member (21) containing a plastic reinforced with a carbon fiber, disposed on one or both of front and back surfaces of the first composite member (11) in the stacking direction, wherein a heat transfer coefficient of the second composite member (21) in each of the fiber direction, the stacking direction and the parallel direction is smaller than the heat transfer coefficient of the first composite member (11) in the fiber direction.

2. The heat passage member (20) according to claim 1, wherein
the first composite member (11) contains a stacked body obtained by stacking a plurality of prepreg sheets (17), each of which contains a plurality of the thermally conductive carbon fibers disposed in the parallel direction and in the stacking direction, and
a thermal conductivity in the fiber direction is larger than a thermal conductivity in each of the parallel direction and the stacking direction.

3. A system comprising a heat-generating section, a heat-radiating section, and a heat passage member (20) according to claim 1 or 2 arranged such that the one end (12A) of the thermally conductive carbon fibers is disposed in the heat-generating section, and the other end (12B) of the thermally conductive carbon fibers is disposed in the heat-radiating section in the fiber direction.

4. A system comprising a heat-generating section, a heat-radiating section, and a heat passage member (20) according to claim 1 or 2 arranged such that a central portion of the thermally conductive carbon fibers is disposed in the heat-generating section, and each of one end (12A) and the other end (12B) of the thermally conductive carbon fibers is disposed in the heat-radiating section in the fiber direction.

5. The system according to claim 3 or 4, wherein
the heat-generating section includes an electronic device (9) of an aircraft (1), and the heat-radiating section includes a fuel tank (7) of the aircraft (1).

## Patentansprüche

1. Ein Wärmedurchgangselement (20), umfassend
ein erstes Verbundelement (11), das ein plattenartiges Element ist und einen Kunststoff enthält, der mit wärmeleitenden Kohlenstofffasern verstärkt ist, die metallbeschichtete Kohlenstofffasern (12) und/oder Kohlenstofffasern auf Pechbasis enthalten, wobei sich die wärmeleitenden Kohlenstofffasern in einer Faserrichtung erstrecken, in einer parallelen Richtung, die die Faserrichtung kreuzt, und in einer Stapelrichtung, die die Faserrichtung und die parallele Richtung kreuzt, angeordnet sind, und jedes von einem Ende (12A) und dem anderen Ende (12B) der wärmeleitenden Kohlenstofffasern in der Faserrichtung freiliegend ist, und
ein zweites Verbundelement (21), das einen mit einer Kohlenstofffaser verstärkten Kunststoff enthält und an einer oder beiden von Vorder- und Rückoberflächen des ersten Verbundelements (11) in der Stapelrichtung angeordnet ist, wobei ein Wärmeübergangskoeffizient des zweiten Verbundelements (21) in jeder der Faserrichtung, der Stapelrichtung und der parallelen Richtung kleiner ist als der Wärmeübergangskoeffizient des ersten Verbundelements (11) in der Faserrichtung.

2. Das Wärmedurchgangselement (20) nach Anspruch 1, wobei
das erste Verbundelement (11) einen gestapelten Körper enthält, der durch Stapeln einer Vielzahl von Prepreg-Lagen (17) erhalten wird, von denen jede eine Vielzahl der wärmeleitenden Kohlenstofffasern enthält, die in der Parallelrichtung und in der Stapelrichtung angeordnet sind,
und
eine thermische Leitfähigkeit in der Faserrichtung größer ist als eine thermische Leitfähigkeit sowohl in der parallelen Richtung als auch in der Stapelrichtung.

3. Ein System mit einem wärmeerzeugenden Abschnitt, einem wärmeabstrahlenden Abschnitt und einem Wärmedurchgangselement (20) nach Anspruch 1 oder 2, das so angeordnet ist, dass das eine Ende (12A) der wärmeleitenden Kohlenstofffasern in dem wärmeerzeugenden Abschnitt angeordnet ist und das andere Ende (12B) der wärmeleitenden Kohlenstofffasern in dem wärmeabstrahlenden Abschnitt in der Faserrichtung angeordnet ist.

4. Ein System mit einem wärmeerzeugenden Abschnitt, einem wärmeabstrahlenden Abschnitt und einem Wärmedurchgangselement (20) nach Anspruch 1 oder 2, das so angeordnet ist, dass ein mittlerer Abschnitt der wärmeleitenden Kohlenstofffasern in dem wärmeerzeugenden Abschnitt angeordnet ist und jedes von einem Ende (12A) und dem anderen Ende (12B) der wärmeleitenden Kohlenstofffasern in dem wärmeabstrahlenden Abschnitt in der Faserrichtung angeordnet ist.

5. Das System nach Anspruch 3 oder 4, wobei
der wärmeerzeugende Abschnitt eine elektronische Vorrichtung (9) eines Flugzeugs (1) umfasst, und der wärmeabstrahlende Abschnitt einen Kraftstofftank (7) des Flugzeugs (1) umfasst.

## Revendications

1. Élément (20) de passage de la chaleur, comprenant
un premier élément (11) composite, qui est un élément analogue à une plaque et qui contient une matière plastique renforcée par des fibres de carbone conductrices thermiquement, contenant l'un ou les deux de fibres (12) de carbone revêtues de métal et des fibres de carbone à base de poix, dans lequel les fibres de carbone conductrices thermiquement s'étendent dans une direction de fibres, sont disposées dans une direction parallèle, croisant la direction des fibres, et dans une direction d'empilement, croisant la direction des fibres et la direction parallèle, et chacune d'une extrémité (12a) et de l'autre extrémité (12b) des fibres de carbone conductrices thermiquement dans la direction des fibres est à découvert ; et
un deuxième élément (21) composite, contenant une matière plastique renforcée par une fibre de carbone, disposé sur l'une ou les deux des surfaces avant et arrière du premier élément (11) composite dans la direction d'empilement, un coefficient de transfert de la chaleur du deuxième élément (21) composite, dans chacune de la direction des fibres de la direction d'empilement et de la direction parallèle, étant plus petit que le coefficient de transfert de chaleur du premier élément (11) composite dans la direction des fibres.

2. Élément (20) de passage de la chaleur suivant la revendication 1, dans lequel
le premier élément (11) composite contient un corps empilé, obtenu en empilant une pluralité de feuilles (17) de pré-imprégné, chacune d'entre elles contenant une pluralité des fibres de carbone conductrices thermiquement disposées dans la direction parallèle et dans la direction d'empilement, et
une conductivité thermique dans la direction de fibre est plus grande qu'une conductivité thermique dans chacune de la direction parallèle et de la direction d'empilement.

3. Système comprenant une partie de production de chaleur, une partie de rayonnement de chaleur et un élément (20) de passage de la chaleur suivant la revendication 1 ou 2, disposés de manière à ce que la une extrémité (12a) des fibres de carbone conductrices thermiquement soit disposée dans la partie de production de chaleur et que l'autre extrémité (12b) des fibres de carbone conductrices thermiquement soit disposée dans la partie de rayonnement de chaleur, dans la direction des fibres.

4. Système comprenant une partie de production de chaleur, une partie de rayonnement de chaleur et un élément (20) de passage de la chaleur suivant la revendication 1 ou 2, disposé de manière à ce qu'une partie centrale des fibres de carbone conductrices thermiquement soit disposée dans la partie de production de chaleur et que chacune d'une extrémité (12a) et de l'autre extrémité (12b) des fibres de carbone conductrices thermiquement soit disposée dans la partie de rayonnement de chaleur dans la direction des fibres.

5. Système suivant la revendication 3 ou 4, dans lequel
la partie de production de chaleur comprend un dispositif (9) électronique d'un aéronef (1) et la partie de rayonnement
de chaleur comprend un réservoir (7) à carburant de l'aéronef (1) .
